# FASCICULE DE BREVET EUROPEEN

(11) **EP 2 430 198 B1**
(45) Date de publication et mention de la délivrance du brevet: **03.07.2019**
(21) Numéro de dépôt: 10729716.0
(22) Date de dépôt: 10.05.2010
(51) Int. Cl.: C21D 1/42, C21D 1/10, C21D 9/32, C23C 8/32

(54) **PROCEDE DE RENFORCEMENT D'UNE PIECE MECANIQUE EN ALLIAGE FERREUX**
VERFAHREN ZUR VERSTÄRKUNG EINES MECHANISCHEN TEILS AUS EINER EISENLEGIERUNG
METHOD OF STRENGTHENING A MECHANICAL PART MADE OF A FERROUS ALLOY

(30) Priorité: 15.05.2009 FR 0953251
(43) Date de publication de la demande: 21.03.2012
(73) Titulaire: PSA Automobiles SA, 78300 Poissy (FR)
(72) Inventeur: LAPIERRE, Philippe, F-25270 Valentigney (FR); GRATECAP, André, F-38920 Crolles (FR)
(74) Mandataire: Bourguignon, Eric Pascal Jean
(86) Numéro de dépôt international: PCT/FR2010/050899
(87) Numéro de publication internationale: WO 2010/130936

(56) Documents cités:
- EP-A- 0 679 725
- EP-A- 1 029 932
- DE-A1- 2 449 237
- FR-A- 942 688
- FR-A- 2 687 169
- FR-A- 2 868 975
- US-A- 5 451 275

## Description

La présente invention concerne un procédé de renforcement d'une pièce mécanique en alliage ferreux.

L'invention trouve une application particulièrement avantageuse dans le domaine de l'industrie automobile pour le renforcement de pièces mécaniques, notamment les composants de boîtes de vitesses, tels que les pignons des arbres primaire et secondaire, les pignons baladeurs, les couronnes, etc.

Certaines pièces mécaniques soumises lors de leur fonctionnement à des frottements très importants, comme les pignons de boîtes de vitesses par exemple, subissent généralement un traitement thermochimique destiné à augmenter les caractéristiques mécaniques et métallurgiques en surface de l'alliage ferreux dont elles sont constituées. Ce traitement thermochimique consiste en une addition de carbone à une température au moins égale au point de transformation austénitique de l'alliage ferreux considéré, le plus souvent entre 800 et 950°C, 850°C en particulier. L'addition de carbone est suivie immédiatement d'une trempe dans de l'huile ou dans un gaz sous pression de manière à geler la structure métallographique ainsi obtenue.

L'addition de carbone peut être réalisée par cémentation ou encore par carbonitruration, opération dans laquelle de l'azote est également additionné à l'alliage ferreux constituant la pièce mécanique dont on veut améliorer les performances mécaniques de surface. Un procédé mettant en oeuvre une telle étape de carbonitruration est décrit dans la demande de brevet japonais n° 2007321854.

A l'issue de ce traitement thermochimique, la pièce mécanique voit sa dureté de surface augmenter jusqu'à des valeurs de l'ordre de 800 HV, ce qui la rend particulièrement résistante aux frottements, à l'usure, à la fatigue, etc., et donc bien adaptée à une utilisation comme pignon de boîtes de vitesses.

On constate néanmoins que les chocs mécaniques intenses auxquels sont soumis les composants de boîtes de vitesses peuvent provoquer la rupture des dentures de certains pignons, ce qui implique des interventions longues et coûteuses. Cette situation préjudiciable est due au fait que la dureté de l'alliage à coeur est trop élevée, par exemple 450 HV pour une dureté de surface de 800 HV, rendant ainsi la pièce mécanique moins résistante aux chocs.

Diverses solutions ont été proposées pour augmenter la résilience des pignons et les rendre moins vulnérables aux chocs.

Parmi ces solutions, on peut citer les traitements thermiques de renforcement mécanique avec grenaillage de pré-contrainte, ou encore l'utilisation d'alliages ferreux constitués par de aciers fortement alliés. Cependant, les caractéristiques mécaniques obtenues par traitement thermique avec grenaillage restent limitées, tandis que, d'un autre côté, les aciers fortement alliés sont plus coûteux et plus difficiles à usiner.

Il est également connu du document FR 942 688 un procédé de traitement thermique proposant une opération de chauffage par induction à fréquence moyenne suivie d'une opération de réchauffage à très haute fréquence, et précédée d'un traitement préliminaire de cémentation.

Aussi, un but de l'invention est de proposer un procédé de renforcement d'une pièce mécanique en alliage ferreux, qui permettrait d'obtenir à moindre coût une très bonne résistance mécanique au niveau du coeur de la pièce.

Ce but est atteint, conformément à l'invention, du fait que ledit procédé comprend :
- Une étape de durcissement de la pièce mécanique par addition de carbone à une température au moins égale au point de transformation austénitique de l'alliage ferreux de la pièce, puis une trempe de ladite pièce,
- une étape de diminution de dureté de ladite pièce par chauffage à induction basse-fréquence à une température comprise dans la zone de revenu dudit alliage ferreux la durée dudit chauffage par induction basse-fréquence étant comprise entre 10 et 30 secondes,
- une étape de durcissement de surface de ladite pièce par chauffage par induction haute-fréquence à une température au moins égale au point de transformation austénitique dudit alliage ferreux, la durée de chauffage par induction haute fréquence étant comprise entre 20 et 40 ms,
- puis une trempe de ladite pièce.

Ainsi, le chauffage par induction basse-fréquence à une température de revenu de l'alliage ferreux permet de libérer des atomes de carbone dans la masse de la pièce grâce à la pénétration importante des ondes basse-fréquence dans la matière, et donc de diminuer la dureté globale de la pièce et d'en augmenter la résilience.

Dans une variante, la température de revenu est comprise entre 300 et 400°C, de préférence sensiblement égale à 360°C.

Dans une variante, la durée dudit chauffage par induction basse-fréquence est sensiblement égale à 20 secondes.

La trempe de ladite pièce est de préférence à l'eau. Cette étape de durcissement de surface est de préférence effectuée à une température comprise entre 800 et 950°C, de préférence sensiblement égale à 850°C. La durée dudit chauffage par induction haute-fréquence est de préférence sensiblement égale à 30 ms.

Le temps séparant l'étape de diminution de dureté et l'étape de durcissement de surface est compris entre 0,5 et 2 minutes, de préférence sensiblement égal à 1 minute.

Cette addition de carbone est de préférence réalisée par carbonitruration.

Dans une variante, l'alliage ferreux est un acier faiblement allié.

Dans une variante, la pièce mécanique est un pignon de boîte de vitesse.

A titre d'exemple, après traitement basse-fréquence, les duretés de surface et de coeur de l'alliage peuvent passer respectivement de 800 à 600 HV et de 450 à 350 HV.

Signalons que la demande de brevet japonais précité propose également la mise en oeuvre d'une étape de revenu. Toutefois, dans ce document, le revenu est réalisé dans un four traditionnel pendant une durée d'environ une heure, alors que le procédé selon l'invention prévoit que la durée dudit chauffage par induction basse-fréquence est comprise entre 10 et 30 secondes, de préférence sensiblement égale à 20 secondes, d'où un gain substantiel en termes de temps de traitement. D'autre part, l'objet essentiel de cette opération de revenu connue est de libérer les contraintes liées à la trempe de traitement thermochimique de carbonitruration plus que de diminuer la dureté à coeur de la pièce.

Un autre avantage de l'invention réside dans le fait que l'alliage ferreux utilisé peut être un acier faiblement allié, alors que le procédé selon la demande de brevet japonais précitée met en oeuvre un acier fortement allié, certes plus résistant mais également plus cher.

On comprend que le revenu par induction basse-fréquence contribue à diminuer la dureté de l'ensemble de la pièce, y compris en surface, ce qui peut présenter un inconvénient en regard des performances mécaniques de résistance aux frottements, à l'usure et à la fatigue.

C'est pour cette raison qu'il est prévu par l'invention que ladite étape de diminution de dureté est suivie d'une étape de durcissement de surface de ladite pièce par chauffage par induction haute-fréquence à une température au moins égale au point de transformation austénitique dudit alliage ferreux, puis d'une tempe de ladite pièce.

Le durcissement est limité à la surface de la pièce du fait de la faible pénétration des ondes haute-fréquence dans la matière par effet de peau.

A l'issue des deux étapes de chauffage par induction, on obtient donc à la fois une pièce de dureté élevée en surface pour une meilleure résistance aux frottements et de dureté plus faible à coeur pour une meilleure résilience aux chocs. En pratique, la dureté de surface peut être ramenée de 600 à 850 HV tout en maintenant la dureté de coeur à environ 350 HV.

On observera que ces deux étapes peuvent être réalisées successivement très simplement avec le même inducteur dont il suffit seulement de modifier la fréquence pour passer d'une étape à l'autre dans un temps très court puisque, selon l'invention, le temps séparant l'étape de diminution de dureté et l'étape de durcissement de surface est compris entre 0,5 et 2 minutes, de préférence sensiblement égal à 1 minute.

Le procédé conforme à l'invention se prête donc très bien au traitement localisé de pièces mécaniques, comme par exemple un pignon particulier sur un arbre de boîte de vitesses.

Enfin, l'alliage ferreux constituant la pièce mécanique peut être préalablement traité pour en augmenter la dureté de surface. C'est en ce sens que l'invention propose que ladite étape de diminution de dureté est précédée d'une étape de durcissement de ladite pièce par addition de carbone à une température au moins égale au point de transformation austénitique dudit alliage ferreux, puis d'une trempe de ladite pièce. En particulier, ladite addition de carbone est réalisée par carbonitruration.

La description qui va suivre en regard des dessins annexés, donnés à titre d'exemples non limitatifs, fera bien comprendre en quoi consiste l'invention et comment elle peut être réalisée.
La figure 1 est une vue de côté d'un arbre de boîte de vitesses comportant un pignon destiné à être renforcé par le procédé conforme à l'invention.
La figure 2 est une vue de côté de l'arbre de boîte de vitesses de la figure 1 dont le pignon à renforcer est placé dans un inducteur hyperfréquence.
La figure 3 est un diagramme montrant les étapes d'un procédé de renforcement conforme à l'invention.

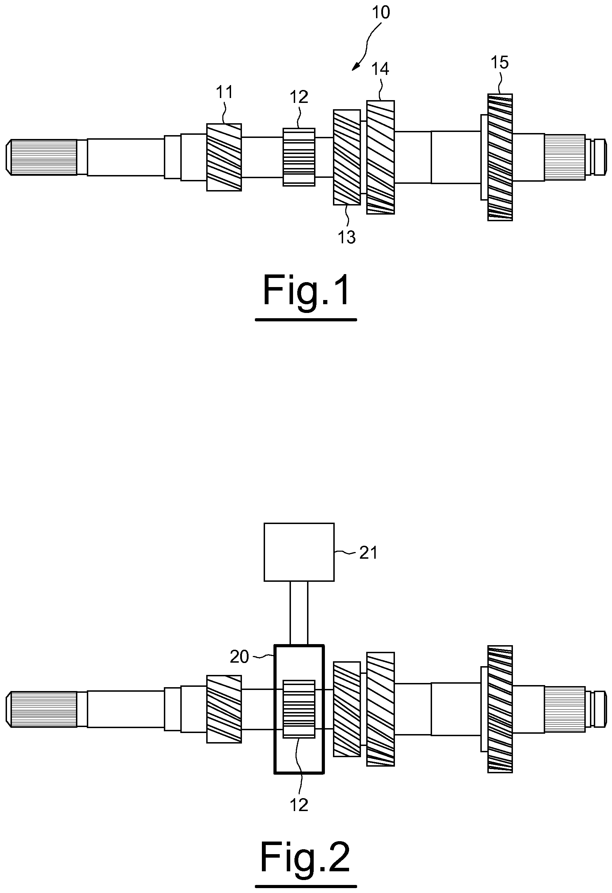

Sur la figure 1 est représenté un arbre 10 de boîte de vitesses comportant un certain nombre de pignons référencés 11, 12, 13, 14, 15.

L'arbre 10 est réalisé dans un alliage ferreux du type acier faiblement allié, de teneur en carbone comprise par exemple entre 0,3 et 0,8. L'avantage de choisir un acier faiblement allié plutôt qu'un acier fortement allié tient au fait qu'il est moins cher et plus facile à usiner.

Compte tenu des frottements importants que doivent subir les pignons 11, 12, 13, 14, 15 durant leur utilisation, l'arbre 10 est soumis à un traitement thermochimique visant à durcir l'alliage en surface en en augmentant la teneur en carbone.

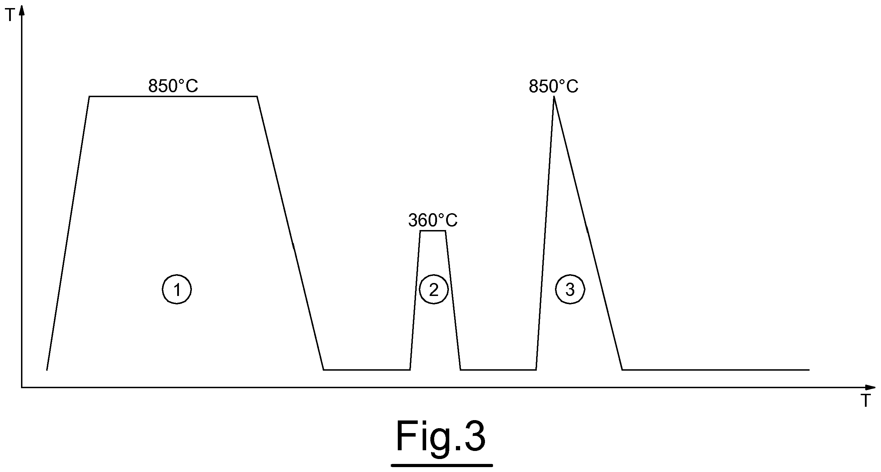

Ce traitement constitue l'étape 1 du diagramme de la figure 3. En pratique, l'addition de carbone recherchée est effectuée par cémentation ou carbonitruration à une température au moins égale au point de transition austénitique de l'alliage, suivie d'une trempe afin de figer la structure obtenue.

Le point de fusion austénitique dépend de la teneur en carbone de l'acier. Il peut varier par exemple de 900°C à 720°C pour des aciers sans carbone à des aciers à 0,8% de carbone, de sorte que la température de durcissement de surface de l'étape 1 peut être choisie entre 800 et 950°C, par exemple 850°C pour les aciers utilisés pour des arbres de boîtes de vitesses.

La trempe est réalisée dans de l'huile, chaude ou froide, ou dans un gaz sous pression, tel que l'azote, l'argon ou l'hélium.

A l'issue de l'étape 1 du procédé, la dureté obtenue en surface est de l'ordre de 800 HV, tandis qu'elle peut atteindre 450 HV à coeur. Cependant, cette dernière valeur de dureté peut s'avérer trop élevée avec pour conséquence de fragiliser certains pignons de l'arbre au point de les rendre cassants, notamment au niveau des dentures.

C'est pour renforcer les pignons concernés, par exemple le pignon 12, que l'invention prévoit de leur faire subir, de manière sélective et localisée, l'étape 2 du diagramme de la figure 3 consistant en une diminution de dureté par chauffage à induction basse-fréquence à une température comprise dans la zone de revenu de l'alliage ferreux. La zone de revenu des aciers alliés est relativement large, de 100 à 650°C par exemple, la température de 360°C indiquée sur la figure 3 correspondant à une valeur typique pour les alliages utilisés dans le contexte de l'invention pour laquelle la température de revenu varie entre 300 et 400°C.

Comme le montre la figure 2, pour réaliser l'étape 2 le pignon 12 à traiter est placé dans un inducteur 20 relié à une source hyperfréquence 21 dont on peut faire varier la fréquence. Afin d'obtenir la diminution de dureté recherchée au coeur du pignon, la source 21 est réglée de manière à produire un rayonnement dans le domaine des basses fréquences.

La durée de l'étape 2 de chauffage à induction basse-fréquence est comprise entre 10 et 30 secondes, 20 secondes par exemple.

A la fin de l'étape 2, la dureté à coeur est réduite à environ 350 HV tandis que la dureté en surface a également diminué, à 600 HV par exemple.

Pour augmenter la dureté de surface et la ramener autour de la valeur initiale de 800 HV, il est prévu, comme le montre la figure 3, de soumettre le pignon 12 à une étape 3 de durcissement de surface par induction à haute-fréquence à une température au moins égale à la température de transformation austénitique de l'alliage, dont on vu plus haut qu'elle pouvait être prise égale à 850°C environ.

Le chauffage par induction haute-fréquence dure de 20 à 40 ms, 30 ms notamment, et est suivi d'une trempe, trempe à l'eau par exemple.

Cette dernière étape est effectuée avec le même inducteur 20 que pour l'étape précédente, il suffit seulement de modifier la gamme de fréquence de la source 21.

Du fait de la faible pénétration des ondes hyperfréquence à haute-fréquence, la dureté à coeur reste sensiblement inchangée à 350 HV. Par contre, la dureté en surface peut être augmentée jusqu'à 850 HV.

On a ainsi obtenu, de manière très simple et localisée, de pouvoir augmenter la résilience du pignon 12 tout en conservant une bonne résistance à l'usure par frottements et à la fatigue.

## Revendications

1. Procédé de renforcement d'une pièce mécanique (12) en alliage ferreux, comprenant :
- Une étape (1) de durcissement de la pièce mécanique (12) par addition de carbone à une température au moins égale au point de transformation austénitique de l'alliage ferreux de la pièce, puis d'une trempe de ladite pièce,
- une étape (2) de diminution de dureté de ladite pièce par chauffage à induction basse-fréquence à une température comprise dans la zone de revenu dudit alliage ferreux la durée dudit chauffage par induction basse-fréquence étant comprise entre 10 et 30 secondes,
- une étape (3) de durcissement de surface de ladite pièce (12) par chauffage par induction haute-fréquence à une température au moins égale au point de transformation austénitique dudit alliage ferreux, la durée de chauffage par induction haute fréquence étant comprise entre 20 et 40 ms,
- puis une trempe de ladite pièce.

2. Procédé selon la revendication 1, dans lequel la température de revenu est comprise entre 300 et 400°C, de préférence sensiblement égale à 360°C.

3. Procédé selon l'une des revendications 1 ou 2, dans lequel la durée dudit chauffage par induction basse-fréquence est sensiblement égale à 20 secondes.

4. Procédé selon l'une des revendications 1 à 3, dans lequel ladite trempe est une trempe à l'eau.

5. Procédé selon l'une des revendications précédentes, dans lequel ladite température de durcissement de surface est comprise entre 800 et 950°C, de préférence sensiblement égale à 850°C.

6. Procédé selon l'une des revendications précédentes, dans lequel la durée dudit chauffage par induction haute-fréquence est sensiblement égale à 30 ms.

7. Procédé selon l'une des revendications précédentes, dans lequel le temps séparant l'étape (2) de diminution de dureté et l'étape (3) de durcissement de surface est compris entre 0,5 et 2 minutes, de préférence sensiblement égal à 1 minute.

8. Procédé selon la revendication précédente, dans lequel ladite addition de carbone est réalisée par carbonitruration.

9. Procédé selon l'une des revendications précédentes, dans lequel ledit alliage ferreux est un acier faiblement allié.

10. Procédé selon l'une des revendications précédentes, dans lequel la pièce mécanique (12) est un pignon de boîte de vitesse.

## Patentansprüche

1. Verfahren zum Verstärken eines mechanischen Teils (12) aus Eisenlegierung, das Folgendes umfasst:
- einen Härtschritt (1) des mechanischen Teils (12) durch Hinzufügen von Kohlenstoff bei einer Temperatur, die mindestens gleich dem austenitischen Umwandlungspunkt der Eisenlegierung des Teils ist, dann ein Abschreckhärten des Teils,
- einen Verminderungsschritt (2) der Härte des Teils durch Erhitzen mit Niederfrequenzinduktion auf eine Temperatur, die in dem Glühbereich der Eisenlegierung liegt, wobei die Dauer des Erhitzens durch Niederfrequenzinduktion zwischen 10 und 30 Sekunden liegt,
- einen Härtschritt (3) der Oberfläche des Teils (12) durch Erhitzen durch Hochfrequenzinduktion auf eine Temperatur, die mindestens gleich dem austenitischen Umwandlungspunkt der Eisenlegierung ist, wobei die Dauer des Erhitzens durch Hochfrequenzinduktion zwischen 20 und 40 ms liegt,
- dann ein Abschreckhärten des Teils.

2. Verfahren nach Anspruch 1, wobei die Temperatur zwischen 300 und 400 °C liegt, bevorzugt im Wesentlichen gleich 360 °C ist.

3. Verfahren nach einem der Ansprüche 1 oder 2, wobei die Dauer des Erhitzens durch Niederfrequenzinduktion im Wesentlichen gleich 20 Sekunden ist.

4. Verfahren nach einem der Ansprüche 1 bis 3, wobei das Abschreckhärten ein Abschreckhärten mit Wasser ist.

5. Verfahren nach einem der vorstehenden Ansprüche, wobei die Oberflächenhärttemperatur zwischen 800 und 950 °C liegt, bevorzugt im Wesentlichen gleich 850 °C ist.

6. Verfahren nach einem der vorstehenden Ansprüche, wobei die Dauer des Erhitzens durch Hochfrequenzinduktion im Wesentlichen gleich 30 ms ist.

7. Verfahren nach einem der vorstehenden Ansprüche, wobei die Zeit, die den Verringerungsschritt (2) der Härte und den Oberflächenhärtschritt (3) trennt, zwischen 0,5 und 2 Minuten liegt, bevorzugt im Wesentlichen gleich 1 Minute ist.

8. Verfahren nach dem vorstehenden Anspruch, wobei das Hinzufügen von Kohlenstoff durch Carbonitrierung erfolgt.

9. Verfahren nach einem der vorstehenden Ansprüche, wobei die Eisenlegierung ein schwach legierter Stahl ist.

10. Verfahren nach einem der vorstehenden Ansprüche, wobei das mechanische Teil (12) ein Schaltgetrieberitzel ist.

## Claims

1. A method of strengthening a mechanical part (12) made of a ferrous alloy, including:
- a step (1) of hardening the mechanical part (12) by addition of carbon at a temperature at least equal to the austenitic transformation point of the ferrous alloy of the part, then a quenching of said part,
- a step (2) of reducing the hardness of said part by low-frequency induction heating to a temperature comprised in the tempering zone of said ferrous alloy, the duration of said low-frequency induction heating being comprised between 10 and 30 seconds,
- a step (3) of surface hardening of said part (12) by high-frequency induction heating to a temperature at least equal to the austenitic transformation point of said ferrous alloy, the duration of high-frequency induction heating being comprised between 20 and 40 ms,
- then a quenching of said part.

2. The method according to Claim 1, in which the tempering temperature is comprised between 300 and 400 °C, preferably substantially equal to 360 °C.

3. The method according to one of Claims 1 or 2, in which the duration of said low-frequency induction heating is substantially equal to 20 seconds.

4. The method according to one of Claims 1 to 3, in which said quenching is a water quenching.

5. The method according to one of the preceding claims, in which said surface hardening temperature is comprised between 800 and 950 °C, preferably substantially equal to 850 °C.

6. The method according to one of the preceding claims, in which the duration of said high-frequency induction heating is substantially equal to 30 ms.

7. The method according to one of the preceding claims, in which the time separating the step (2) of reducing the hardness and the step (3) of surface hardening is comprised between 0.5 and 2 minutes, preferably substantially equal to 1 minute.

8. The method according to the preceding claim, in which said addition of carbon is carried out by carbonitriding.

9. The method according to one of the preceding claims, in which said ferrous alloy is a low-alloy steel.

10. The method according to one of the preceding claims, in which the mechanical part (12) is a gearbox pinion.
